# EUROPEAN PATENT APPLICATION

(11) **EP 4 578 691 A2**
(43) Date of publication of application: **02.07.2025**
(21) Application number: 24189122.5
(22) Date of filing: 17.07.2024
(51) Int. Cl.: B60K 35/10, B60K 35/21, B60K 35/22, B60K 35/25, B60K 35/28, B60K 35/29, B60K 35/50, B60K 35/53, B60K 35/55, B60K 35/65

(54) **COCKPIT SYSTEM AND MOBILE DEVICE**

(30) Priority: 28.12.2023 KR 20230195623
(71) Applicant: Hyundai Mobis Co., Ltd., Seoul 06141 (KR)
(72) Inventor: KIM, Kyung Hoon, Seongnam-si 13600 (KR)
(74) Representative: Vossius & Partner Patentanwälte Rechtsanwälte mbB

(57) **Abstract**

A cockpit system and a mobile device are disclosed. The cockpit system provided in the mobile device includes: a front display disposed in front of a driver seat and a passenger seat of the mobile device, and configured to have a plurality of display regions; a first operating system configured to receive at least one first operation signal from a driver or a passenger; a second operating system configured to receive at least one second operation signal from the driver or the passenger; and a controller configured to change a display screen of at least one of the front display, the first operating system, and the second operating system based on the first operation signal or the second operation signal, wherein the first operating system and the second operating system are implemented in a projection manner by a projector located therein.

## Description

This application claims the benefit of Korean Patent Application No. 10-2023-0195623, filed on December 28, 2023.

### BACKGROUND OF THE DISCLOSURE

### Field of the Disclosure

The embodiments of the present disclosure relate to a display of a mobile device such as a vehicle and an unmanned aerial vehicle (UAV), and more particularly to a cockpit system including a display.

### Discussion of the Related Art

Recently, as vehicles have become digitized, many controllers are installed into the vehicles. Various communication functions between the controllers may allow the vehicle's location to be remotely checked via the Internet or using a smartphone and may enable a user to discover nearby charging stations. All information about a current status of the vehicle, such as a battery charging state or a pre-conditioning state of the vehicle, is checked in real time by a button touch of a user (or driver). In addition, an intelligent driving assistance system acquires information about road driving to make driving more convenient for a driver.

In this regard, a cluster can be used in the vehicle. The cluster may provide the basic functions of the vehicle, for example, a driving speed, a mileage, a tachograph, and an instrument panel function showing an engine speed (engine rpm). For example, the cluster may provide accurate and convenient vehicle information required for charging infrastructure network information, a driving range, a battery current status, information output, and other driving environments.

In particular, vehicles have recently used digital clustering of various digital cockpits to effectively express vehicle information. Therefore, there is a need to develop technology that can handle these digital cockpits in an integrated manner.

### SUMMARY OF THE DISCLOSURE

The present disclosure is intended to solve the above-mentioned problems. An object of the present disclosure is to provide an operating system implemented in a projection manner by a projector located therein.

Another object of the present disclosure is to provide a see-through panel configured to provide information to a driver and passengers by transmitting light from a lower region of a display when the display moves downward.

Technical subjects to be solved by the present disclosure are not limited to the above-mentioned technical solutions, and it should be noted that other technical subjects not described above can be understood by those skilled in the art from the description of the present disclosure below.

In accordance with an embodiment of the present disclosure, a cockpit system provided in the mobile device may include: a front display disposed in front of a driver seat and a passenger seat of the mobile device, and configured to have a plurality of display regions; a first operating system configured to receive at least one first operation signal from a driver or a passenger; a second operating system configured to receive at least one second operation signal from the driver or the passenger; and a controller configured to change a display screen of at least one of the front display, the first operating system, and the second operating system based on the first operation signal or the second operation signal, wherein the first operating system and the second operating system are implemented in a projection manner by a projector located therein.

Each of the first operating system and the second operating system may include a plurality of protrusions formed at regular intervals, each of which protrudes by a predetermined height.

Each of the first operating system and the second operating system may further include a vibrator located to correspond to the plurality of protrusions and configured to generate vibration, wherein the controller controls the vibrator corresponding to protrusions through which contact is sensed, from among the plurality of protrusions.

The mobile device may include a camera configured to recognize a presence or absence of the passenger, wherein the controller interacts with the camera to adjust a driver's operating range of the second operating system depending on the presence or absence of the passenger.

Through the camera, when the passenger does not exist, the controller may adjust the driver's operating range to correspond to the entirety of the second operating system; and through the camera, when the passenger exists, the controller may adjust the driver's operating range to correspond to a left portion of a half of the second operating system.

The mobile device may include a camera configured to recognize whether the driver is looking forward; and the controller interacting with the camera may control the second operating system through the camera such that, when the driver is looking forward and controls the second operating system through a specific gesture of the driver, the second operating system is controlled.

The controller may control the front display to move downward based on a low signal among the first operation signals, and further includes a see-through panel. After downward movement of the front display, the see-through panel is configured to provide information to the driver and the passenger by transmitting light emitted from a lower region of the front display.

The plurality of display regions of the front display may include a first shy button, a first In-Vehicle Infotainment (IVI) display, a second IVI display, and a second shy button.

When receiving the low signal, information provided through the see-through panel may correspond to a screen displayed through each of the first shy button, the first IVI display, the second IVI display, and the second shy button, wherein the information is more simplified than information displayed through an upper end of the front display.

In accordance with another embodiment of the present disclosure, a mobile device provided with a cockpit system may include the cockpit system. The cockpit system includes a front display disposed in front of a driver seat and a passenger seat of the mobile device, and configured to have a plurality of display regions; a first operating system configured to receive at least one first operation signal from a driver or a passenger; a second operating system configured to receive at least one second operation signal from the driver or the passenger; and a controller configured to change a display screen of at least one of the front display, the first operating system, and the second operating system based on the first operation signal or the second operation signal, wherein the first operating system and the second operating system are implemented in a projection manner by a projector located therein.

It is to be understood that both the foregoing general description and the following detailed description of the present disclosure are exemplary and explanatory and are intended to provide further explanation of the disclosure as claimed.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure.
FIG. 1 is a diagram illustrating an example of a front display including a plurality of display regions according to the embodiments of the present disclosure.
FIG. 2 is a diagram for specifically explaining display positions for each display mode according to the embodiments of the present disclosure.
FIG. 3 is a diagram illustrating examples of display screens of a first operating system and a second operating system according to the embodiments of the present disclosure.
FIG. 4 is a diagram illustrating a general operation flow of the first operating system and the second operating system according to the embodiments of the present disclosure.
FIGS. 5 and 6 are diagrams illustrating examples of operations of the first and second operating systems according to the embodiments of the present disclosure.
FIG. 7 is a diagram illustrating an example of adjusting the second operating system according to the embodiments of the present disclosure.
FIG. 8 is a diagram illustrating an example of an operating range of the second operating system depending on the presence or absence of a passenger according to the embodiments of the present disclosure.
FIG. 9 is a diagram illustrating an example of an operation mode of the first operating system according to the embodiments of the present disclosure.
FIGS. 10 to 17 are diagrams for specifically explaining the operation modes of the first operating system according to the embodiments of the present disclosure.

### DETAILED DESCRIPTION OF THE DISCLOSURE

Description will now be given in detail according to exemplary embodiments disclosed herein, with reference to the accompanying drawings. For the sake of brief description with reference to the drawings, the same or equivalent components may be provided with the same reference numbers, and description thereof will not be repeated.

In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity.

The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

Hereinafter, a cockpit system and a mobile device according to the embodiments of the present disclosure will be described in detail with reference to the attached drawings, and repeated descriptions thereof will herein be omitted for brevity.

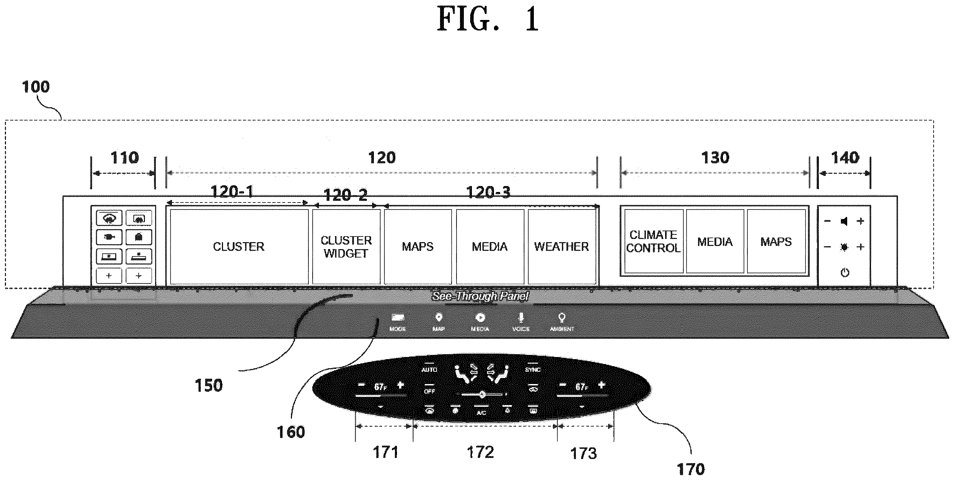

FIG. 1 is a diagram illustrating an example of a front display including a plurality of display regions according to the embodiments of the present disclosure.

It is assumed that the front display shown in FIG. 1 is placed in front of a driver's seat and a passenger seat of the mobile device. In other words, it is preferable that the front display be disposed across the entire front region of the mobile device so that the front display can be arranged across not only the front region of the driver's seat but also the front region of the passenger seat.

Additionally, the front display 100 according to the embodiment shown in FIG. 1 may include a plurality of display regions (110, 120, 130, 140). Specifically, a first shy button 110, a first In-Vehicle Infotainment (IVI) display 120, a second IVI display 130, and a second shy button 140 are shown in FIG. 1, but it should be noted that the plurality of display regions may be configured in various forms.

For example, as shown in FIG. 1, the first IVI display 120 may be displayed while being divided into a cluster 120-1, a cluster widget 120-2, and an IVI 120-3. Specifically, the cluster 120-1 may display a cluster screen related to driving information, and the cluster widget 120-2 may display information in the form of a widget. Additionally, the IVI 120-3 may provide an IVI display for the driver, unlike the second IVI display 130 for the passenger seat. Although the example in FIG. 1 shows an example of providing maps, media, and weather information, the scope or spirit of the present disclosure is not limited thereto.

The shy buttons (110, 140) generally refer to buttons that are set to be recognized by the user's field of view (FOV) only when necessary. In the example of FIG. 1, the first shy button 110 is a shy button that provides a function (for example, a function related to driving control) that the driver can use when necessary, and the second shy button 140 is a shy button that provides a function (for example, a function related to music playback) that a passenger in the passenger seat can use when necessary.

Meanwhile, the first IVI display 120 can play (or reproduce) the driver's driving-related cluster, cluster widget, map, media, and weather-related applications, and can reset a region where the application is to be displayed according to the driver's (or passenger's) manipulation or condition settings.

The second IVI display 130 is an application that can be controlled by the passenger, and may display applications such as weather-related control, media, and maps.

However, the above-described configuration of the display is merely an example, and the corresponding regions may be integrated and displayed according to the driver/passenger manipulation or condition settings. For example, when the display mode is set to a theater mode, as will be described later, one image integrated into the first IVI display 120 and the second IVI display 130 described above may also be displayed.

Meanwhile, the embodiment of the present disclosure proposes a method for selecting and supporting a low mode to secure the driver's FOV from among display modes. During the low mode, the front display 100 described above may move downward by a controller (not shown).

In addition, the embodiment of the present disclosure may provide a structure including a see-through panel 150 as shown in FIG. 1. When the front display 100 moves downward according to the application of the low mode as described above, light emitted from the lower region of the front display 100 may be configured to provide information to the driver and the passenger through the above-described see-through panel 150.

At this time, it is assumed that the information provided through the see-through panel 150 is information corresponding to the screens respectively displayed through the first shy button 110, the first IVI display 120, the second IVI display 130, and the second shy button 140.

However, it is preferable that the information provided through the see-through panel 150 be more simplified than the information displayed through an upper end of the front display 100. Here, "simplified information" may refer to information that can be implemented at a lower resolution than information displayed through the upper end of the front display 100, may refer to a smaller amount of information than the information displayed through the upper end of the front display 100, or may refer to information displayed as a combination of the lower-resolution information and the smaller amount of information.

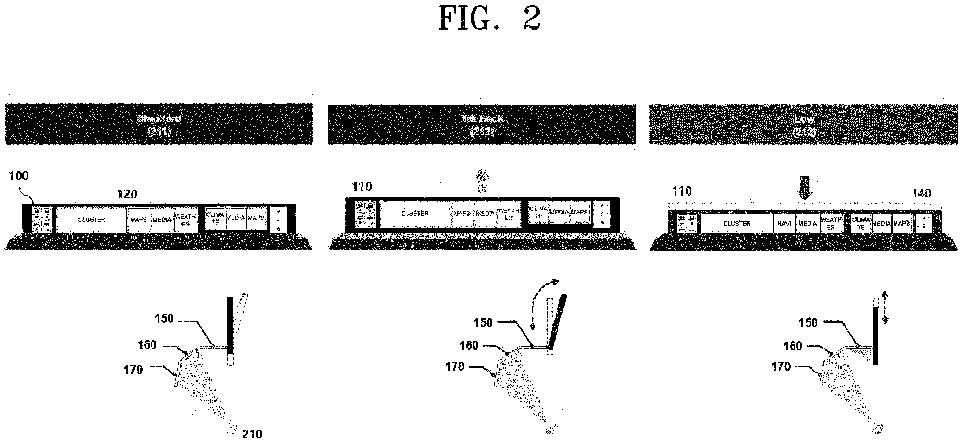

Meanwhile, as shown in FIG. 1, the cockpit system according to an embodiment of the present disclosure may include a first operating system 160 and a second operating system 170. The first operating system 160 and the second operating system 170 may be implemented by a projection method. A detailed description thereof will be given with reference to FIG. 2.

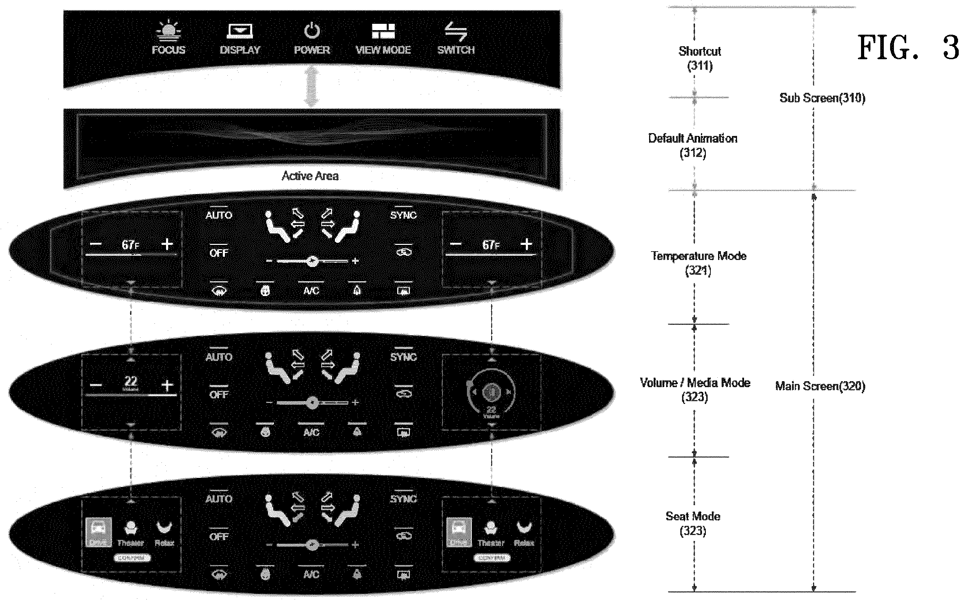

As shown in FIG. 1, the second operating system 170 may be divided into an operating unit for the driver (hereinafter referred to as "driver operating unit") 171, an HVAC operating unit 172, and an operating unit for the passenger (hereinafter referred to as "passenger operating unit") 172. A detailed description thereof will be given with reference to FIG. 3.

The controller may adjust whether or not the passenger operating unit 172 is implemented depending on the presence or absence of the passenger. In other words, when the absence of the passenger is recognized, the controller may control the second operating system 170 so that the passenger operating unit 172 can be implemented. Alternatively, when the absence of the passenger is recognized, the controller may control the second operating system 170 so that the passenger operating unit 172 does not implement anything.

FIG. 2 is a diagram for specifically explaining display positions for each display mode according to the embodiments of the present disclosure.

First, in the embodiment shown in FIG. 2, the display position in the basic mode 211 is preferably set to a preset height such that the bottom line of a display active region of the first IVI display of the front display 100 is not covered by the see-through panel 150.

Next, in a tilt-back mode 212 of the embodiment shown in FIG. 2, the height of the driver's eyes or the height of the driver's nose is measured as described above. Accordingly, the front display 100 is tilted back so that the display efficiency for the driver can be improved. Additionally, in a preferred embodiment of the present disclosure, the tilt-back degree of the front display 100 may be set to finely adjust through the first shy button 110.

Finally, in the low mode 213 of the embodiment shown in FIG. 2, the front display 100 may move downward to secure the front visibility by measuring the height of the driver's eyes/nose as described above. In this case, as described above, simplified information can be provided through light emitted from the lower portion of the front display 100 through the see-through panel 150.

In the low mode 313 according to the embodiment of the present disclosure, a region located at the bottom of the shy buttons (110, 140) may be covered by downward movement of the display. Due to characteristics of the shy buttons (110, 140), it is not efficient to use light emitted from the lower portion of the corresponding shy buttons (110, 140) to provide information through the see-through panel 150. Accordingly, in the case of the shy buttons (110, 140), unlike the IVI display (120, 130), the arrangement of buttons can be changed to maintain the function of the existing shy buttons within the region not covered in the low mode 313.

Meanwhile, FIG. 2 shows an embodiment in which the first operating system 160 and the second operating system 170 are implemented by a projection method using the internal projector 210. A light emitting display such as an LED display, can be used to implement the first or second operating system 160 or 170 based on the display scheme, but there are various curves/curved surfaces in the interior space of a mobile device (specifically, the vehicle), and it is difficult to implement the light emitting display considering such interior characteristics of the vehicle.

Therefore, according to one embodiment of the present disclosure, the first operating system 160 and the second operating system 170 are configured by a projection method using the front internal projector 210 of the mobile device. As shown in FIG. 2, the internal projector 210 may have advantages in that the first operating system 160 and the second operating system 170 can be freely implemented even in the space where several curves/curved surfaces exist.

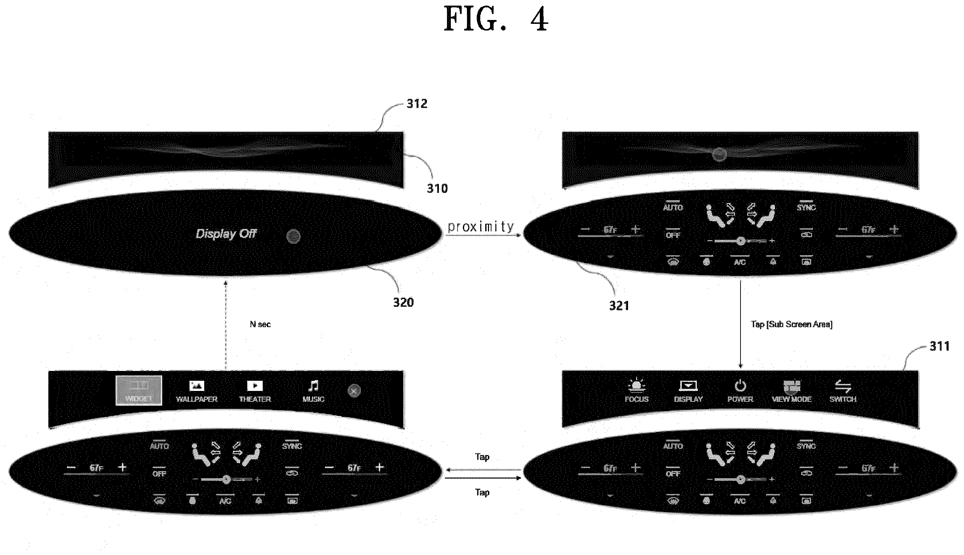

FIG. 3 is a diagram illustrating examples of display screens of the first operating system and the second operating system according to the embodiments of the present disclosure. FIG. 4 is a diagram illustrating a general operation flow of the first operating system and the second operating system according to the embodiments of the present disclosure.

The sub-screen 310 shown in FIGS. 3 and 4 may correspond to the first operating system 160 shown in FIG. 1. The main screen 320 shown in FIGS. 3 and 4 may correspond to the second operating system 170 shown in FIG. 1. For convenience of explanation, the first operating system 160 will be described as the sub-screen 310 and the second operating system 170 will be described as the main screen 320 in the description related to FIGS. 3 and 4.

As shown in FIG. 3, each of the sub-screen 310 and the main screen 320 may have an active region, and the display mode implemented by the sub-screen 310 and the main screen 320 can be displayed within the active region.

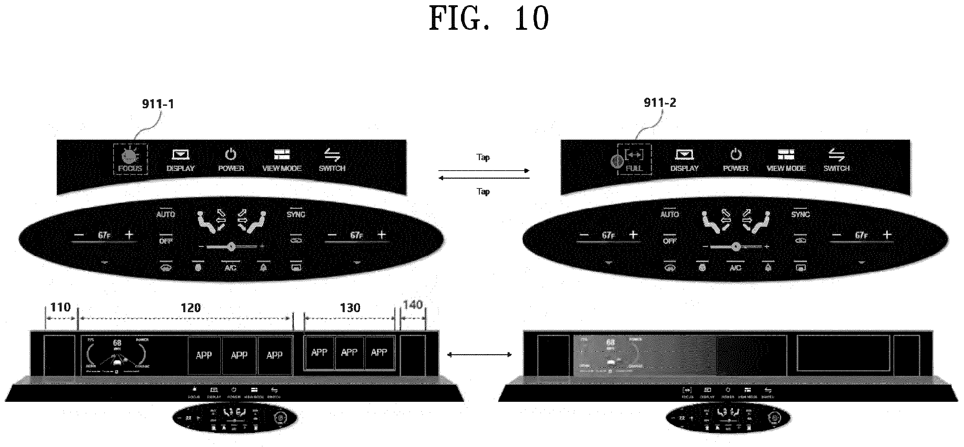

The display mode implemented by the sub-screen 310 may include a shortcut mode 311 and an animation mode 312. The shortcut mode 311 may display a shortcut-shaped operation icon within the active region of the sub-screen 310. A detailed description thereof will be given later with reference to FIGS. 10 to 16.

The animation mode 312 shows a basic state of the sub-screen 310, and may enable the animation, etc. to be displayed on the sub-screen 310 or may enable no data to be displayed on the sub-screen 310. When a user (driver or passenger) touches the sub-screen 310 in the animation mode 312, the mode of the sub-screen 310 may be changed from the animation mode 312 to the shortcut mode 311.

The display mode implemented by the main screen 320 may include a temperature mode 321, a volume/media mode 322, and a seat mode 323. Depending on the mode, the main screen 320 can change the display screen to be implemented thereon. More specifically, as described with reference to FIG. 1, the main screen 320 (i.e., the second operating system 170) may be divided into the driver operating unit 171, the HVAC operating unit 172, and the passenger operating unit 172. Depending on the mode, the main screen 320 may change the display screen to be implemented by the driver operating unit 171 and the passenger operating unit 172.

For example, in the temperature mode 321, each of the driver operating unit 171 and the passenger operating unit 173 may output an operating unit that can adjust the temperature. Alternatively, for example, in the volume/media mode 322, each of the driver operating unit 171 and the passenger operating unit 173 may output an operating unit that can control the volume or media. Alternatively, for example, in the seat mode 323, the driver operating unit 171 and the passenger operating unit 173 may output an operating system that can provide a combination of buttons to select a driving mode, a theater mode, and a relaxation mode.

Changing the mode of the sub-screen 310 and changing the mode of the main screen 320 can be performed by using a specific gesture such as tapping or sliding.

As shown in FIG. 4, both the sub-screen 310 and the main screen 320 may be in a state where the display is turned off. At this time, the sub-screen 310 may be in a display-off state or may be in an animation mode 312.

When the controller determines that a user (passenger or driver) has approached the main screen 320, the controller can adjust the main screen 320 to output a display mode. At this time, the display mode that is output by the main screen 320 may be one of the temperature mode 321, the volume/media mode 322, and the seat mode 323. FIG. 4 is a diagram illustrating an example in which the display mode that is output by the main screen 320 is the temperature mode 321.

Additionally, the user (passenger or driver) may change the mode of the sub-screen 310 from the animation mode 312 to the shortcut mode 311 by tapping the sub-screen 310.

In a situation where the sub-screen 310 corresponds to the shortcut mode 311 and the main screen 320 corresponds to one of several modes, when a specific gesture such as a touch on the sub-screen 310 and the main screen 320 does not occur for N seconds, the sub-screen 310 may change to the animation mode 311 and the main screen 320 may change to the display-off state.

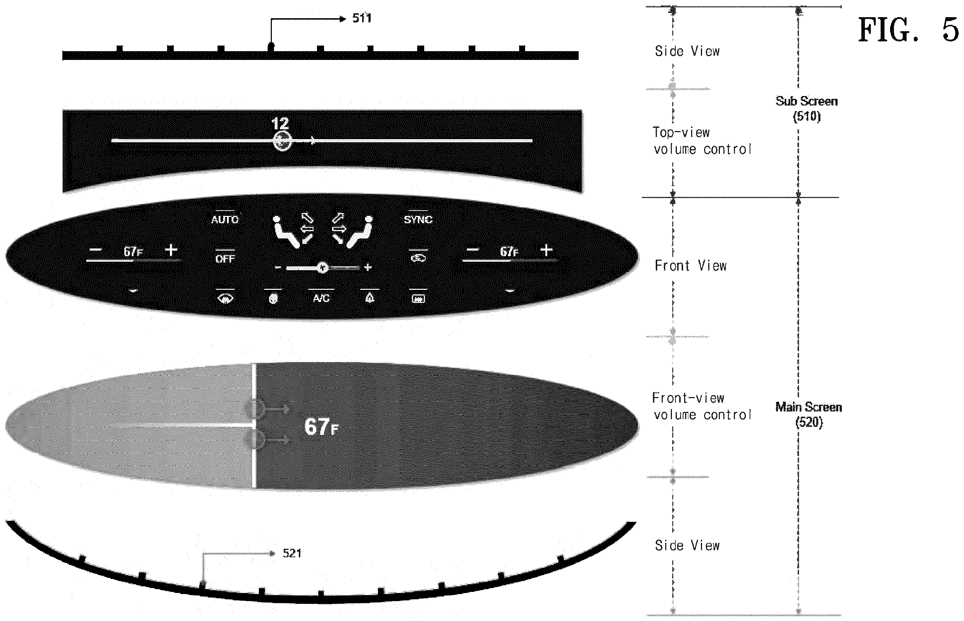

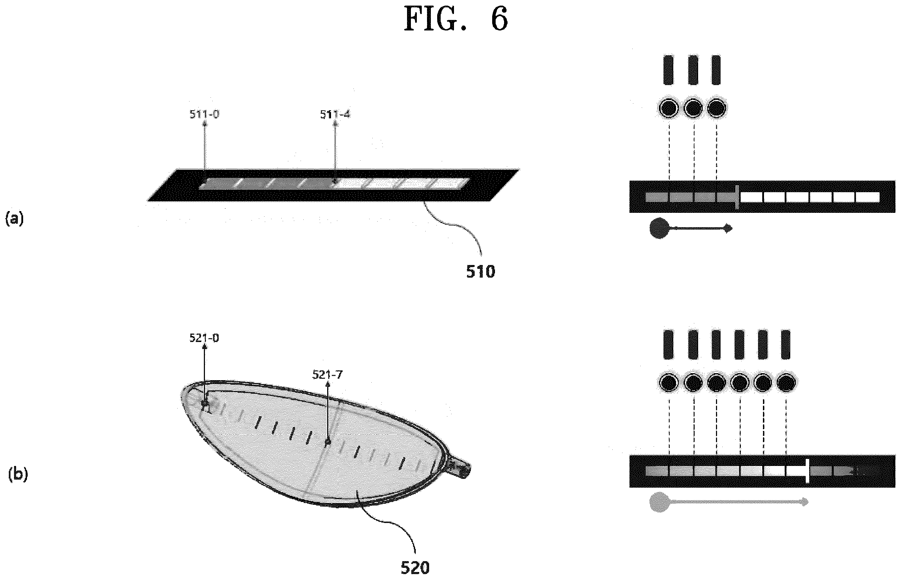

FIGS. 5 and 6 are diagrams illustrating examples of operations of the first and second operating systems according to the embodiments of the present disclosure.

The sub-screen 510 shown in FIGS. 5 and 6 may correspond to the first operating system 160 shown in FIG. 1 or may correspond to the sub-screen 310 shown in FIGS. 3 and 4. The main screen 520 shown in FIGS. 5 and 6 may correspond to the second operating system 170 shown in FIG. 1 or may correspond to the main screen 320 shown in FIGS. 3 and 4. For convenience of description, in the following description related to FIGS. 5 and 6, the first operating system 160 will be described as the sub-screen 510 and the second operating system 170 will be described as the main screen 520.

As shown in FIGS. 5 and 6, a plurality of protrusions 511, each of which protrudes by a predetermined height, may be formed on the sub-screen 510, and a plurality of protrusions 521, each of which protrudes by a predetermined height, may be formed on the main screen 520. At this time, it may be desirable for a plurality of protrusions 511 or 521 to be formed at regular intervals in the left and right directions.

Referring to the example of FIG. 5, for example, the protrusions 511 formed on the sub-screen 510 may adjust the volume depending on the number of protrusions 511 that are in contact with each other. In other words, as in the example shown in FIG. 6(a), when the user (driver or passenger) slidably contacts a plurality of protrusions from the 0^{th} protrusion (511-0) located at the leftmost position to the fourth protrusion (511-4), the volume can be increased by a degree corresponding to four spaces of FIG. 5. The magnitude of volume corresponding to one space of FIG. 5 may be designated by the user.

In addition, for example, as shown in FIG. 5, the temperature of the protrusions 521 formed on the main screen 520 can be adjusted depending on the number of protrusions 521 that are in contact with each other. In other words, as in the example shown in FIG. 6(b), the user (driver or passenger) slidably contacts a plurality of protrusions from the 0^{th} protrusion (521-0) located at the leftmost position to the seventh protrusion (521-7), the temperature can be increased by a degree corresponding to seven spaces of FIG. 5. The degree of temperature corresponding to one space of FIG. 5 may be designated by the user.

The sub-screen 510 and the main screen 520 can display the current volume or the temperature status using LEDs, etc. Accordingly, the user may reduce the magnitude of volume or the degree of temperature by moving to the left from a current state, or may increase the magnitude of volume or the degree of temperature by moving to the right from a current state.

Depending on the embodiment, as shown in the example of FIG. 6, the sub-screen 510 may include a vibrator (not shown) that generates vibration while located at a position corresponding to the position of the protrusions 511, and the main screen 520 may include a vibrator (not shown) that generates vibration while located at a position corresponding to the position of the protrusions 521. The controller may adjust the vibrator corresponding to the protrusions (511, 521) through which contact is sensed, so that the vibrator can generate vibration.

For example, as shown in FIG. 6(a), when the user (driver or passenger) comes into contact with the protrusions (511-0, 511-1, 511-2, 511-3, 511-4) from the leftmost 0^{th} protrusion (511-0) to the fourth protrusion (511-4), the vibrator corresponding to the position of the protrusions (511-0, 511-1, 511-2, 511-3, 511-4) may generate vibration. Accordingly, the user can recognize how many spaces corresponding to the volume level can be changed based on the number of sensed vibrations.

Alternatively, for example, as shown in FIG. 6(b), when the user (driver or passenger) comes into contact with the protrusions (511-0, 511-1, 511-2, 511-3, 511-4, 511-5, 511-6, 511-7) from the leftmost 0^{th} protrusion (511-0) to the seventh protrusion (511-7), the vibrator corresponding to the position of the protrusions (511-0, 511-1, 511-2, 511-3, 511-4, 511-5, 511-6, 511-7) may generate vibration. Accordingly, the user can recognize how many spaces corresponding to the temperature degree can be changed based on the number of sensed vibrations.

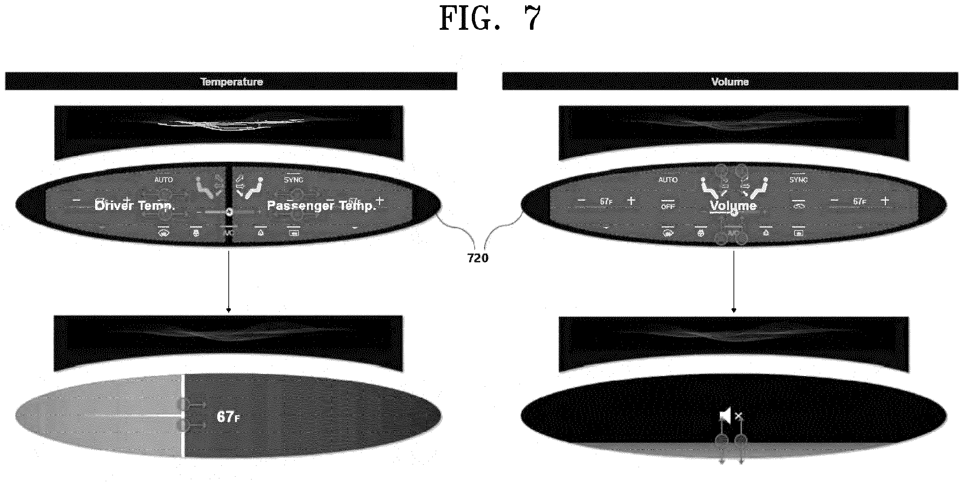

FIG. 7 is a diagram illustrating an example of adjusting the second operating system according to the embodiments of the present disclosure.

The main screen 720 shown in FIG. 7 may correspond to the second operating system 170 shown in FIG. 1 or may correspond to the main screens 320 and 520 shown in FIGS. 3 to 6. For convenience of explanation, the second operating system 170 will be described as the main screen 720 in the description related to FIG. 7.

As shown in FIG. 7, the main screen 720 may control the temperature and volume to be adjusted together based on the direction in which the temperature and the volume are adjusted.

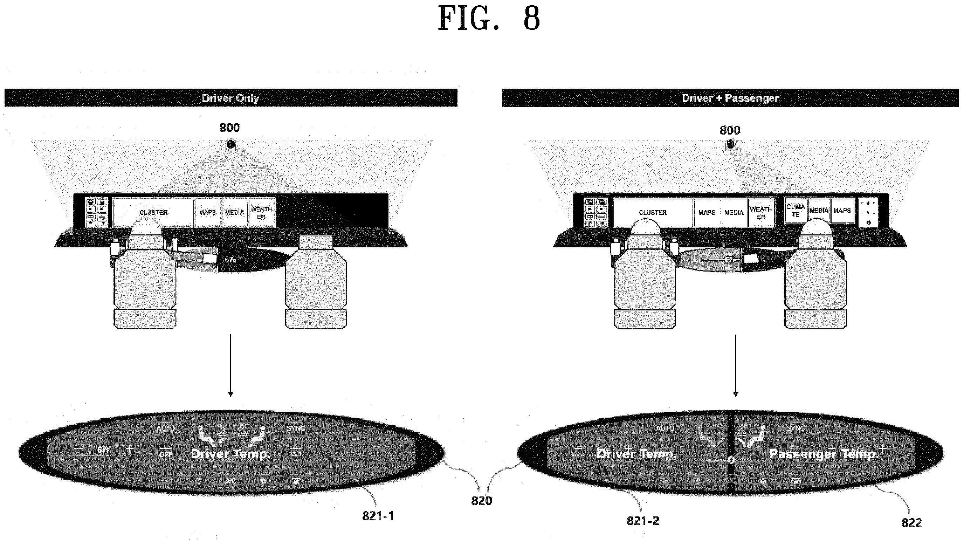

For example, when a user (a driver or a passenger) adjusts the main screen 720 in a horizontal direction, the temperature can be adjusted. More specifically, when the main screen 720 is adjusted in a horizontal direction within the left region with respect to the center of the main screen 720, the temperature of the driver seat can be adjusted. When the main screen 720 is adjusted in a horizontal direction within the right region with respect to the center of the main screen 720, the passenger seat can be adjusted. A detailed description thereof will be given later with reference to FIG. 8. At this time, when the user performs dragging in the left and right directions, only a slider that slides within the main screen 720 may be enlarged and other components displayed within the main screen 720 may disappear.

In addition, for example, when a user (a driver or a passenger) adjusts the main screen (520) in the vertical direction, the volume can be adjusted. More specifically, when the user performs dragging in the direction from an upper end to a lower end with respect to the center of the main screen 720, the volume is adjusted to be reduced. When the user performs dragging in the direction from the lower end to the upper end with respect to the center of the main screen 720, the volume can be adjusted to be increased. In this case, when the user performs dragging in the lowermost direction, the volume may be set to a mute state.

FIG. 8 is a diagram illustrating an example of an operating range of the second operating system depending on the presence or absence of a passenger according to the embodiments of the present disclosure.

The main screen 820 shown in FIG. 8 may correspond to the second operating system 170 shown in FIG. 1 or may correspond to the main screens (320, 520, 720) shown in FIGS. 3 to 7. For convenience of explanation, the second operating system 170 will be described as the main screen 820 in the description related to FIG. 8.

As shown in FIG. 8, the main screen 820 can adjust the driver's operating ranges (821-1, 821-2) depending on the presence or absence of a passenger. At this time, the controller can recognize the presence or absence of a passenger through a camera 800 provided in the mobile device.

For example, when there is no passenger, that is, only the driver is present, the entire area of the main screen 820 may correspond to the driver's operation range 821-1. That is, in this case, the driver can adjust the temperature of the driver seat by performing dragging in the horizontal direction in any area of the main screen 820.

Alternatively, for example, if there is a passenger, half of the entire area of the main screen 820 may correspond to the driver's operation range 821-2. In other words, the area located to the left of the center of the main screen 820 may correspond to the driver's operating range 821-2, and the area located to the right of the center of the main screen 820 may correspond to the passenger's operating range 822. Therefore, in this case, the driver can adjust the temperature of the driver seat by performing dragging in the horizontal direction within the driver's operating range 821-2 located to the left of the center of the main screen 820, and the passenger can adjust the temperature of the passenger seat by performing dragging in the horizontal direction within the driver's operating range 822 located to the right of the center of the main screen 820.

In addition, when the driver is looking forward without looking at the main screen 820, the controller can control the main screen 820 to be adjusted even when recognizing that the main screen 820 is being manipulated through a specific gesture. At this time, the specific gesture may be, for example, a drag using two fingers (2-Finger Drag).

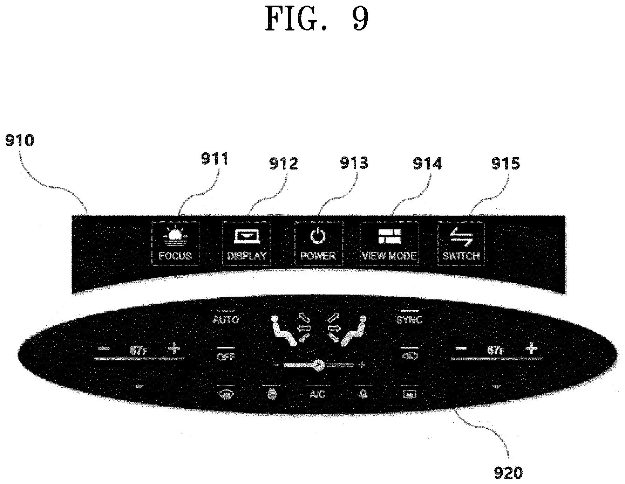

FIG. 9 is a diagram illustrating an example of an operation mode of the first operating system according to the embodiments of the present disclosure.

The sub-screen 910 shown in FIG. 9 may correspond to the first operating system 160 shown in FIG. 1 or may correspond to the sub-screens (310, 510) shown in FIGS. 3 to 6.

The main screen 920 shown in FIG. 9 may correspond to the second operating system 170 shown in FIG. 1 or may correspond to the main screens (320, 520, 720, 820) shown in FIGS. 3 to 8. For convenience of explanation, in the description related to FIG. 9, the first operating system 160 will be described as the sub-screen 910, and the second operating system 170 will be described as the main screen 920.

As shown in FIG. 9, the sub-screen 910 may include several operation modes. In other words, the sub-screen 910 can provide a mode corresponding to the first operation signal by receiving the first operation signal provided by the user. At this time, the first operation signal may be a signal generated by user touch.

The sub-screen 910 may include various modes, for example, a focus mode 911, a display mode 912, a power mode 913, a view mode 914, and a switch mode 915. The modes shown in FIG. 9 are merely examples and can be expressed as the first to fifth operation modes.

The user can adjust the displayed screen of the front display 100 (see FIG. 1) or vertical movement of the front display 100 based on the first operation signal provided to the sub-screen 910.

The operation modes of the sub-screen 910 will hereinafter be described in detail with reference to FIGS. 10 to 16.

FIGS. 10 to 17 are diagrams for specifically explaining the operation modes of the first operating system according to the embodiments of the present disclosure.

First, FIG. 10 shows an example in which the sub-screen 910 receives, as a first operation signal, a signal generated when the user touches the first operation mode 911 or the focus mode 911 from among the operation modes of the sub-screen 910.

As shown in FIG. 10, the sub-screen 910 may include a focus button 911-1 and a full button 911-2 as shortcut buttons displayed as the focus mode 911. When the user touches the focus button 911-1, the sub-screen 910 can execute the focus mode 911. When the focus mode 911 is executed, as shown in FIG. 10, the shortcut button can be changed from the focus button 911-1 to the full button 911-2. When the full button 911-2 is touched, the sub-screen 910 may release the focus mode 911.

In the focus mode 911, only the cluster 120-1 of the first IVI display 120 may be displayed and the rest may not be displayed. That is, only the cluster 120-1 of the first IVI display 120 from among the front display 100 is displayed, and the first shy button 110, the second IVI display 130, and the second shy button 140 can be turned off (i.e., a display-off state), and the cluster widgets 120-2 and the IVI 120-3 of the first IVI display 120 can also be turned off.

Accordingly, when the user touches the focus mode 911 as the first operation signal on the sub-screen 910, the front display 100 may display only information about cluster driving and may not display all remaining information.

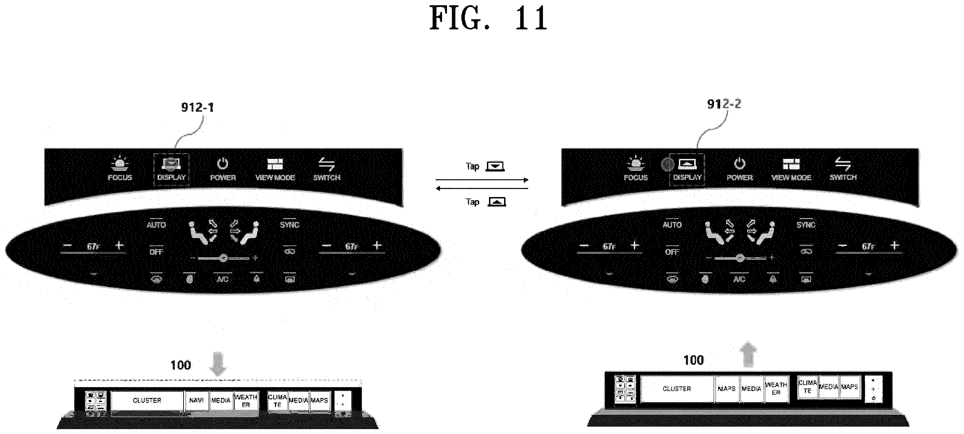

FIG. 11 shows an example in which the sub-screen 910 receives, as a second operation signal, a signal generated when the user touches the second operation mode 912 or the display mode 912 from among the operation modes of the sub-screen 910. The display mode 912 may include a low mode in which the front display 100 moves downward and an up mode in which the front display 100 moves upward.

As shown in FIG. 11, the sub-screen 910 may include a low button 912-1 and an up button 912-2 as shortcut buttons displayed as the display mode 912. When the user touches the low button 912-1, the sub-screen 910 can execute the low mode 911 from among the display mode 912. When the low mode 912 is executed, as shown in FIG. 11, the shortcut button can be changed from the low button 912-1 to the up button 912-2. When the up button 912-2 is touched, the sub-screen 910 may release the up mode 911 from among the display mode 912.

When the low mode 912 is executed, the controller can control the front display 100 to move downward. At this time, as described with reference to FIG. 1, after the front display 100 moves downward, the see-through panel 150 may transmit light emitted from the lower region of the front display 100, and may provide information to the driver and the passenger. When the low mode 912 is released, the controller can control the front display 100 to move upward.

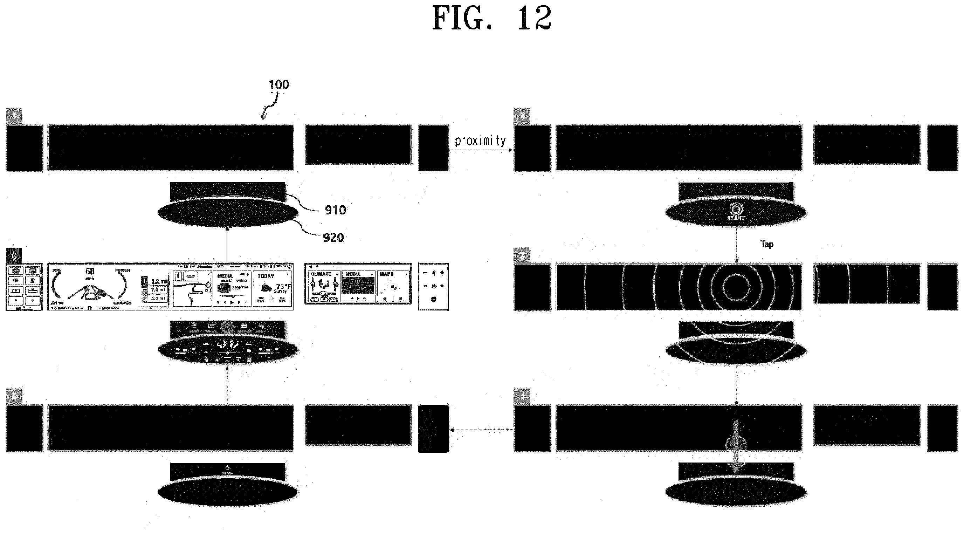

FIG. 12 shows an example in which the sub-screen 910 receives, as a third operation signal, a signal generated when the user touches the third operation mode 913 or the power mode 913 from among the operation modes of the sub-screen 910. The sub-screen 910 may include a power button as a shortcut button displayed as a power mode 913.

As shown in FIG. 12, the front display 100, the sub-screen 910, and the main screen 920 may all be in a display-off state (see reference number ` 1' of FIG. 12).

When the controller determines that a user (passenger or driver) has approached the main screen 320, the controller can control the main screen 320 to display a start button as a shortcut button (see reference number '2' of FIG. 12). When the user touches the start button, the front display 100, the sub-screen 910, and the main screen 920 can execute a preset animation image (see reference number '3' of FIG. 12).

The front display 100, the sub-screen 910, and the main screen 920 may continue to display the animation images thereon (see reference number '4' of FIG. 12). When display of the animation images is stopped, the power button is first displayed on the sub-screen 320, and the remaining screens is then displayed on the sub-screen 320 (see reference number '5' of FIG. 12).

The user may use the front display 100, the sub-screen 910, and the main screen 920 in a state in which the front display 100, the sub-screen 910, and the main screen 920 are all turned on (see reference number '6' of FIG. 12). When the user touches the power button, the sub-screen 910 may execute the power mode 913 (see reference number '1' of FIG. 12).

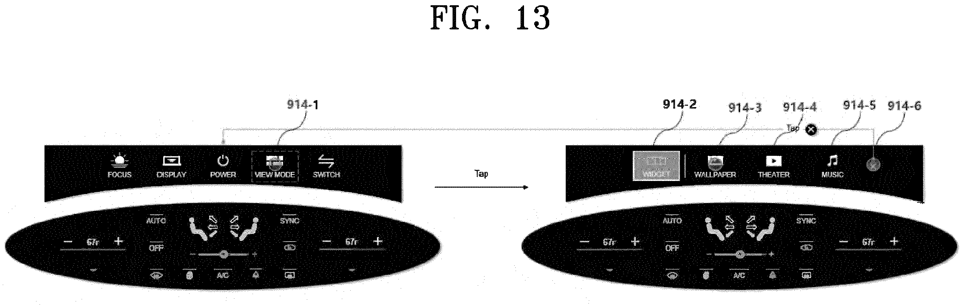

FIG. 13 shows an example in which the sub-screen 910 receives, as a fourth operation signal, a signal generated when the user touches the fourth operation mode 914 or the view mode 914 from among the operation modes of the sub-screen 910.

As shown in FIG. 13, the sub-screen 910 may include a view button 914-1, a widget button 914-2, a wallpaper button 914-3, a movie button 914-4, a music button 914-5, and an end button 914-6 as shortcut buttons displayed as the view mode 914. When the user touches the view button 914-1, the sub-screen 910 can execute the view mode 914. When the view mode 914 is executed, as shown in FIG. 13, the sub-screen 910 may display the widget button 914-2, the wallpaper button 914-3, the movie button 914-4, the music button 914-5, and the end button (914-6) as shortcut buttons. At this time, when the user touches the end button 914-6, the sub-screen 910 may release the view mode 914.

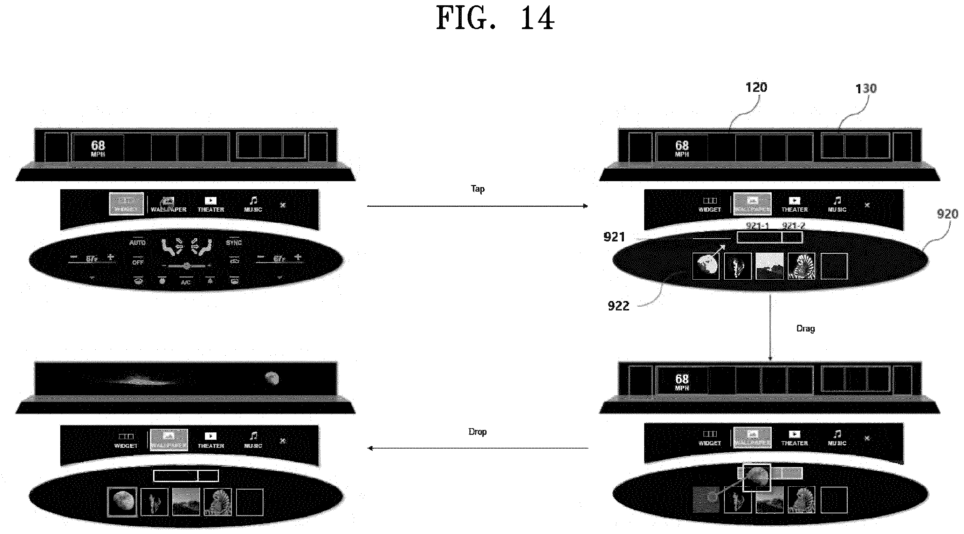

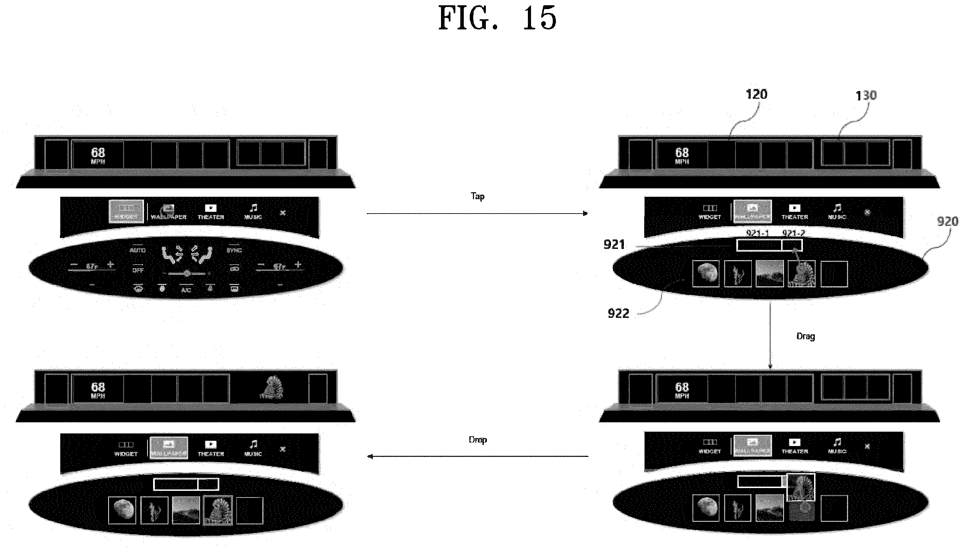

FIGS. 14 and 15 show examples in which the sub-screen 910 in the view mode 914 receives a signal generated when the user touches the wallpaper button 914-3.

As shown in FIGS. 14 and 15, when the sub-screen 910 receives a signal generated when the wallpaper button 914-3 is touched, the main screen 920 may be changed to a wallpaper setting mode. The wallpaper setting mode may set a theme to be applied to the first IVI display 120 and the second IVI display 130.

At this time, the main screen 920 may include an application area display unit 921 located at the upper end thereof, and a settable wallpaper type display unit 922 located at the lower end thereof. The user may set a theme to be applied to the first IVI display 120 and the second IVI display 130 by dragging the desired wallpaper among various wallpapers displayed on the settable wallpaper type display unit 922 to the application area display unit 921.

The application area display unit 921 may include a first application area display unit 921-1 and a second application area display unit 921-2. For example, when the user drags the desired wallpaper to the first application area display unit 921-1, the corresponding theme can be applied to both the first IVI display 120 and the second IVI display 130.

Additionally, for example, when the user drags the desired wallpaper to the second application area display unit 921-2, the corresponding theme may be applied only to the second IVI display 130. In this case, the first IVI display 120 can maintain the existing display screen.

In addition, for example, if the user wants to turn off the second IVI display 130, the user may drag a black theme from among the wallpapers displayed on the settable wallpaper type display unit 922 to the second application area display unit 921-2 to turn off the second IVI display unit 921-2.

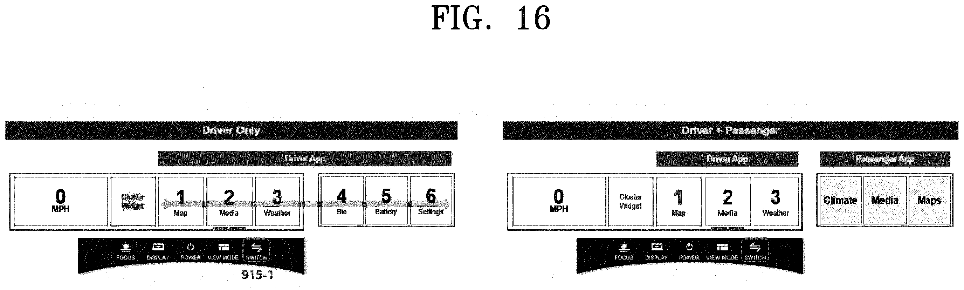

FIG. 16 shows an example in which the sub-screen 910 receives, as a fifth operation signal, a signal generated when the user touches the fifth operation mode 915 or the switch mode 915 from among the operation modes of the sub-screen 910.

As shown in FIG. 16, the sub-screen 910 may include a switch button 915-1 as a shortcut button displayed as a switch mode 915. When the user touches the switch button 915-1, the sub-screen 910 can execute the switch mode 915.

When the switch mode 915 is executed, the controller may change an application displayed on the IVI 120-3 that provides an IVI display for the driver from among the first IVI display 120, and may also change an application displayed on a second IVI display 130 that provides an IVI display for the passenger from among the first IVI display 120.

That is, as the application (e.g., map, media, and weather) displayed on the IVI 120-3 and the application (e.g., bio, battery, and settings) displayed on the second IVI display 130 are changed to others, the driver may set the preferred application to be located at a closer position.

In addition, even when there is a passenger in the vehicle, the application (e.g., map, media, and weather) displayed on the IVI 120-3 that provides an IVI display for the driver and the application (e.g., climate, media, and map) displayed on the second IVI display 130 that provides an IVI display for the passenger may be changed to others.

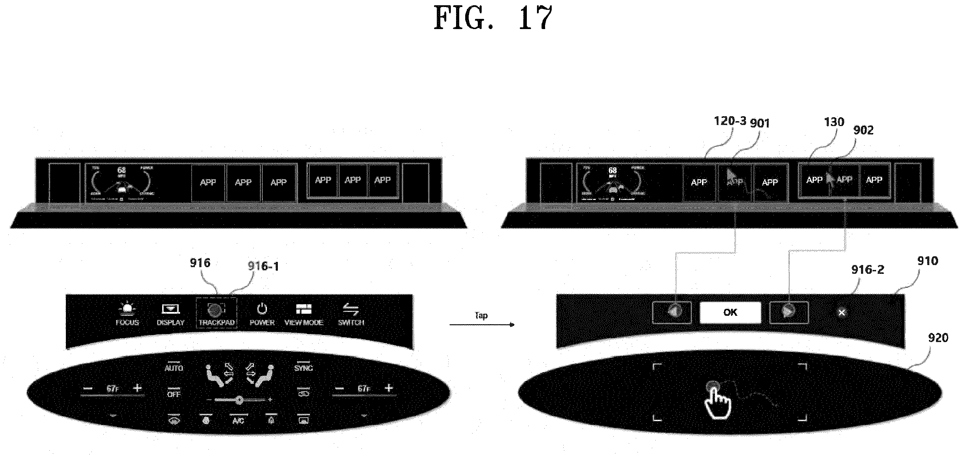

FIG. 17 is a diagram illustrating an example case in which the sub-screen 910 additionally includes a trackpad mode 916 as a sixth operation mode. In other words, FIG. 17 shows an example case in which the sub-screen 910 receives, as a sixth operation signal, a signal generated when the user touches the sixth operation mode or the sixth trackpad mode 916 from among the operation modes of the sub-screen 910.

As shown in FIG. 16, the sub-screen 910 may include a trackpad button 916-1 as a shortcut button displayed as the trackpad mode 916. When the user touches the trackpad button 916-1, the sub-screen 910 can execute the trackpad mode 916. When the trackpad mode 916 is executed, as shown in FIG. 17, the sub-screen 910 may display the end button 916-2 as a shortcut button. At this time, when the user touches the end button 916-2, the sub-screen 910 may release the trackpad mode 916.

When the trackpad mode 916 is executed, all displays for other components within the main screen 920 may disappear, and a black screen or a finger-shaped display may appear. The pointers (901, 902) may be displayed in the IVI 120-3 or the second IVI display 130. That is, the user can manipulate the pointers 901 and 902 on the main screen 920 through gestures such as sliding, dragging, clicking, etc.

In addition, an indication mark (e.g., an arrow mark) that can be used to control which one of the IVI 120-3 and the second IVI display 130 will be used to display the pointers 901 and 902 can be displayed on the sub-screen 910. For example, as shown in FIG. 17, the user may enable the pointer 901 to be displayed within the IVI 120-3 by clicking the left arrow and pressing the OK button. Alternatively, the user can adjust the pointer 902 to be displayed on the second IVI display 130 by clicking the right arrow and pressing the OK button.

A detailed description of preferred embodiments of the present disclosure disclosed as described above is provided so that those skilled in the art can implement and embody the present disclosure. Although the description is made with reference to the preferred embodiments of the present disclosure, it will be appreciated by those skilled in the art that various modifications and variations can be made in the present disclosure without departing from the spirit or scope of the disclosures. For example, those skilled in the art may use the respective components described in the above-described embodiments in a manner of combining them with each other.

Accordingly, the present disclosure is not intended to be limited to the embodiments shown herein, but to be given the broadest scope that matches the principles and novel features disclosed herein.

As is apparent from the above description, the embodiments of the present disclosure may provide an operating system implemented in a projection manner by a projector located therein, thereby enabling a user to freely implement the operating system.

In addition, the embodiments of the present disclosure may provide a see-through panel configured to provide information to the driver and passengers by transmitting light from the lower region of the display when the display moves downward, thereby easily providing a front view of the driver through a low mode from among driving modes.

## Claims

1. A cockpit system provided in a mobile device comprising:
a front display disposed in front of a driver seat and a passenger seat of the mobile device, and configured to have a plurality of display regions;
a first operating system configured to receive at least one first operation signal from a driver or a passenger;
a second operating system configured to receive at least one second operation signal from the driver or the passenger; and
a controller configured to change a display screen of at least one of the front display, the first operating system, and the second operating system based on the first operation signal or the second operation signal,
wherein
the first operating system and the second operating system are implemented in a projection manner by a projector located therein.

2. The cockpit system according to claim 1, wherein each of the first operating system and the second operating system includes:
a plurality of protrusions formed at regular intervals, each of which protrudes by a predetermined height.

3. The cockpit system according to claim 2, wherein:
each of the first operating system and the second operating system further includes a vibrator located to correspond to the plurality of protrusions and configured to generate vibration,
wherein
the controller controls the vibrator corresponding to protrusions through which contact is sensed, from among the plurality of protrusions.

4. The cockpit system according to claim 1, 2, or 3, wherein the mobile device includes:
a camera configured to recognize a presence or absence of the passenger,
wherein
the controller interacts with the camera to adjust a driver's operating range of the second operating system depending on the presence or absence of the passenger.

5. The cockpit system according to claim 4, wherein:
through the camera, when the passenger does not exist, the controller is configured to adjust the driver's operating range to correspond to the entirety of the second operating system; and
through the camera, when the passenger exists, the controller is configured to adjust the driver's operating range to correspond to a left portion of a half of the second operating system.

6. The cockpit system according to any one of claims 1 to 5, wherein:
the mobile device includes a camera configured to recognize whether the driver is looking forward; and
the controller interacting with the camera controls the second operating system through the camera such that, when the driver is looking forward and controls the second operating system through a specific gesture of the driver, the second operating system is controlled.

7. The cockpit system according to any one of claims 1 to 6, wherein:
the controller controls the front display to move downward based on a low signal among the first operation signals, and further includes a see-through panel,
wherein
after downward movement of the front display, the see-through panel is configured to provide information to the driver and the passenger by transmitting light emitted from a lower region of the front display.

8. The cockpit system according to claim 7, wherein the plurality of display regions of the front display includes:
a first shy button, a first In-Vehicle Infotainment (IVI) display, a second IVI display, and a second shy button.

9. The cockpit system according to claim 8, wherein:
when receiving the low signal, information provided through the see-through panel is configured to correspond to a screen displayed through each of the first shy button, the first IVI display, the second IVI display, and the second shy button,
wherein
the information is more simplified than information displayed through an upper end of the front display.

10. A mobile device provided with a cockpit system comprising:
the cockpit system including
a front display disposed in front of a driver seat and a passenger seat of the mobile device, and configured to have a plurality of display regions;
a first operating system configured to receive at least one first operation signal from a driver or a passenger;
a second operating system configured to receive at least one second operation signal from the driver or the passenger; and
a controller configured to change a display screen of at least one of the front display, the first operating system, and the second operating system based on the first operation signal or the second operation signal,
wherein
the first operating system and the second operating system are implemented in a projection manner by a projector located therein.
